# EUROPEAN PATENT APPLICATION

(11) **EP 1 492 349 A2**
(43) Date of publication of application: **29.12.2004**
(21) Application number: 04102062.9
(22) Date of filing: 12.05.2004
(51) Int. Cl.: H04N 7/173

(54) **Interactive content without embedded triggers**

(30) Priority: 24.06.2003 US 602500
(71) Applicant: MICROSOFT CORPORATION, Redmond, Washington 98052-6399 (US)
(72) Inventor: Danker, Daniel, Sunnyvale CA California 94085 (US); Barrett, Peter T., San Francisco CA California 94117 (US)
(74) Representative: Grünecker, Kinkeldey, Stockmair & Schwanhäusser Anwaltssozietät

(57) **Abstract**

Systems and methods are described for broadcasting interactive content without using triggers embedded in the broadcast content. When a viewer sees an item of interest while viewing a program, the viewer can initiate a request for information (RFI) about that item with a single button actuation. When the RFI is entered, a client device, such as a set-top box, detects the RFI and transmits RFI data to a server, including the channel viewed, a time stamp and - in at least one implementation - a system-defined amount of closed captioning data. The RFI data is cross-referenced with program time code information, prog-ramming guide information, program information and/or advertiser information to determine the context of the RFI, i.e. what the user saw that made the user enter the RFI. Information about the item is then sent to the viewer as a system message, an e-mail message, a post, or by way of any other delivery mode.

## Description

### TECHNICAL FIELD

The systems and methods described herein relate to interactive content broadcasting. More particularly, the described systems and methods relate to implementing interactive content broadcasting without requiring triggers to be embedded in broadcast content.

### BACKGROUND

Interactive television provides users and content providers a way in which they can better communicate with each other. There is a virtually endless amount of information that a content provider would like to provide to users, but each portion of the information is of interest to only a small subset of users. It would be inefficient to bombard all users with all the information, so interactive television is used to determine which users are interested in what information.

Typical use of interactive content requires that a trigger be embedded into the content that, when detected at a client device (such as a set-top box) causes a user interface to be displayed. The user interface asks a user if the user would like to see more information related to the content being viewed (a program or advertisement). If the user wants more information, then the user clicks an acceptance icon that causes the information to be sent to the user.

A problem with this method is that a significant amount of human effort is required to embed the triggers into the content. Also, users may be disaffected by having interfaces that are related to embedded triggers pop up very often during their viewing.

### SUMMARY

Systems and methods are described for broadcasting interactive content without using content-embedded triggers. The problems of the effort of embedding such triggers and of annoying viewers with unwanted pop-up interfaces are thus mitigated.

The systems and methods described herein enable television viewers to "click" on a frame being displayed to trigger a request for information based on the active video. The context of the content (specifically, the time of the request, the channel being viewed, the headend and - in some cases - closed caption data associated with the content) is used to determine why the user requested additional information.

When additional information is requested, the additional information is sent to the requesting user by sending a system message, an e-mail message, a regular post, etc. As a result, detailed information about programs or advertisements are designed to reach only those users that are most likely to utilize the information.

### BRIEF DESCRIPTION OF THE DRAWINGS

The same numbers are used throughout the drawings to reference like features and components.
Fig. 1 illustrates an exemplary system architecture in which the described systems and methods can be implemented.
Fig. 2 illustrates a television-based system that includes an exemplary client device on which the described systems and methods can be implemented.
Fig. 3 is a block diagram of an exemplary response system.
Fig. 4a is an illustration of an exemplary advertiser rules module.
Fig. 4b is an illustration of an exemplary program rules module.
Fig. 5 is a flow diagram depicting an exemplary methodological implementation of broadcasting interactive content without using embedded triggers.
Fig. 6 is a flow diagram depicting an exemplary methodological implementation of identifying an advertiser from a request for information.
Fig. 7 is a diagram of an exemplary distributed network system in which the described systems and methods may be implemented.
Fig. 8 illustrates an exemplary broadcast video distribution architecture in which the described techniques can be implemented.
Fig. 9 further illustrates components of the exemplary broadcast video distribution architecture shown in Fig. 8.

### DETAILED DESCRIPTION

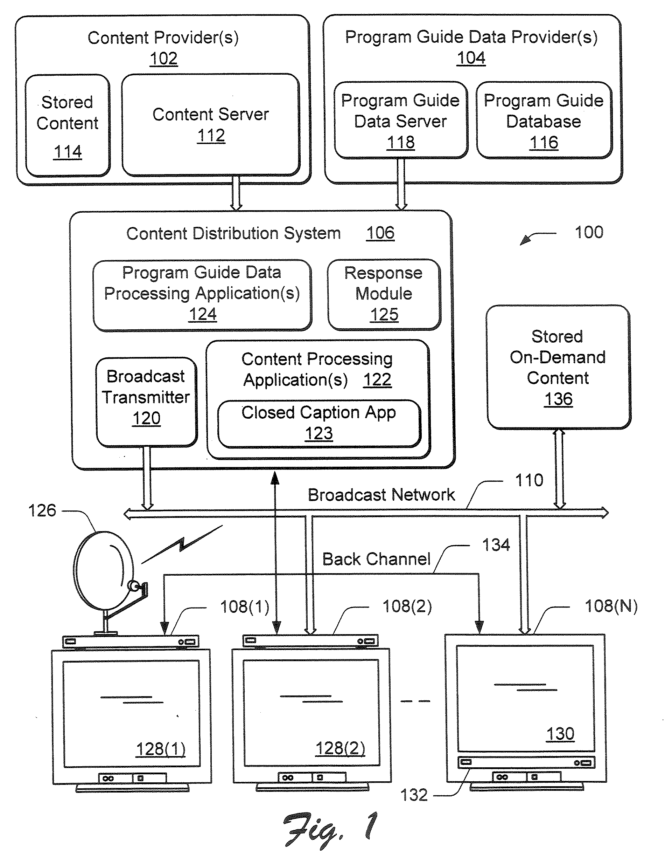

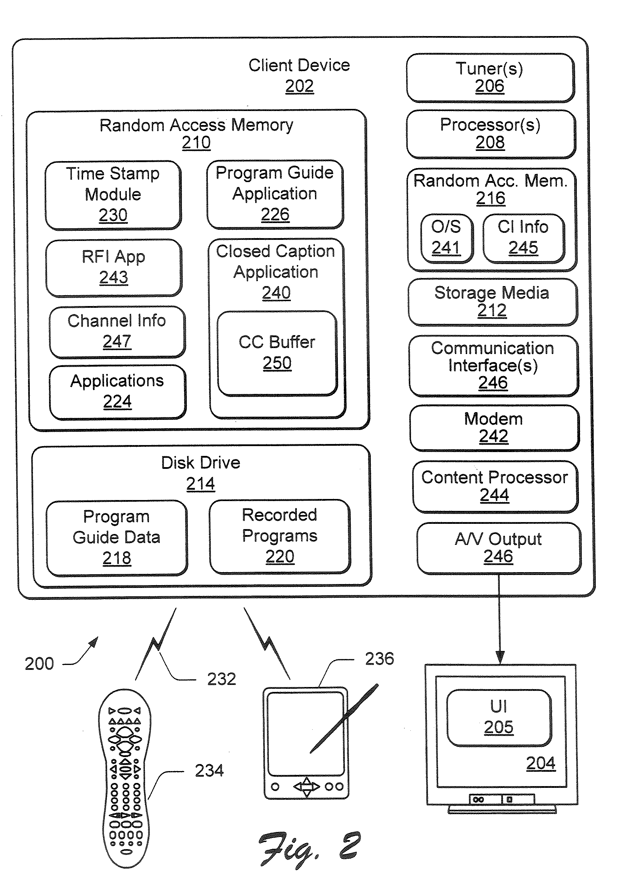

Systems and methods for broadcasting interactive content without using embedded triggers are described herein. An exemplary broadcast system architecture and an exemplary client device in a television-based system are initially described with reference to Fig. 1 and Fig. 2, respectively, to define an operating environment on which the described techniques may be implemented.

### Exemplary Broadcast System

**Fig. 1** illustrates an exemplary system 100 in which a technique for using broadcast television for interactive broadcasts that do not require content-embedded triggers may be implemented. System 100 facilitates distribution of content and program guide data to multiple viewers. The system 100 includes one or more content providers 102, one or more program guide data providers 104, a content distribution system 106, and multiple client devices 108(1), 108(2), ..., 108(N) coupled to the content distribution system 106 via a broadcast network 110.

A content provider 102 can be implemented as a satellite operator, a network television operator, a cable operator, and the like. A content provider 102 includes a content server 112 to control distribution of stored content 114, such as movies, television programs, commercials, music, and similar audio, video, and/or image content from content provider 102 to the content distribution system 106. The stored content 114 may also include content available for purchased, such as pay-per-view and/or video-on-demand content. Additionally, content server 112 controls distribution of live content (e.g., content that was not previously stored, such as live feeds) and/or content stored at other locations to the content distribution system 106. The content distribution system 106 is representative of a headend service and/or program data center that provides content and program guide data to multiple subscribers (e.g., client devices 108).

A program guide data provider 104 includes a program guide database 116 and a program guide data server 118. The program guide database 116 stores program guide data that is used to generate an electronic or interactive program guide (or "program guide"). Program guide data can include a program title, program broadcast day(s) to identify which days of the week the program will be broadcast, program start times(s) to identify a time that the program will be broadcast on the particular day or days of the week, and a program category.

A program guide data provider 104 transmits program guide data to the program guide data server 118, which processes the program guide data prior to distribution to generate a published version of the program guide data which can contain programming information for all broadcast channels and on-demand content listings for one or more days.

Content distribution system 106 includes a broadcast transmitter 120, one or more content processing applications 122 (including a closed caption application 123), and one or more program guide data processing applications 124. Broadcast transmitter 120 broadcasts signals, such as cable television signals, across broadcast network 110. Broadcast network 110 can include a cable television network, RF, microwave, satellite, and/or data network, such as the Internet, and may also include wired or wireless transmission media using any broadcast format or broadcast protocol. Additionally, broadcast network 110 can be any type of network, using any type of network topology and any network communication protocol, and can be represented or otherwise implemented as a combination of two or more networks.

A content processing application 122 processes the content received from a content provider 102 prior to transmitting the content across broadcast network 110. Similarly, a program guide data processing application 124 processes the program guide data received from a program guide data provider 104 prior to transmitting the program guide data across broadcast network 110. A particular content processing application 122 may encode, or otherwise process, the received content into a format that is understood by the multiple client devices 108 which are coupled to broadcast network 110.

The content distribution system 106 also stores a response module 125 that handles requests for information received from clients. When a request for information is received from a client, the response module 125, as will be discussed in greater detail below, determines what information the user is interested in and to whom the request for information should be related.

Although Fig. 1 shows a single content provider 102, a single program guide data provider 104, and a single content distribution system 106, exemplary system 100 can include any number of content providers and/or program guide data providers coupled to any number of content distribution systems.

Client devices 108 can be implemented in a number of ways. For example, a client device 108(1) receives broadcast content from a satellite-based transmitter via a satellite dish 126. Client device 108(1) is also referred to as a set-top box or a satellite receiving device. Client device 108(1) is coupled to a television 128(1) for presenting the content received by the client device (e.g., audio data, video data, and image data), as well as a graphical user interface. A particular client device 108 can be coupled to any number of televisions 128 and/or similar devices that can be implemented to display or otherwise render content. Similarly, any number of client devices 108 can be coupled to a single television 128.

Client device 108(2) is also coupled to receive broadcast content from broadcast network 110 and provide the received content to associated television 128(2). Client device 108(N) is an example of a combination television 130 and integrated set-top box 132. In this example, the various components and functionality of the set-top box are integrated into the television, rather than using two separate devices. The set-top box integrated into the television can receive broadcast signals via a satellite dish (similar to satellite dish 126) and/or via broadcast network 110. In alternate implementations, client devices 108 may receive broadcast signals via the Internet or any other broadcast medium, such as back channel 134 which can be implemented using a protocol such as an Internet protocol (IP), UDP protocol, etc. The back channel 134 may also be implemented with various types of delivery mechanisms, such as an RF back channel (i.e., cable), a modem, or the like. The back channel 134 provides an alternate communication link between each of the client devices 108 and the content distribution system 106. In some instances, the back channel 134 may also provide communication between the client devices 108. However, in a typical implementation, one client device 108 must usually communicate with another client device through a headend service.

The exemplary system 100 also includes stored on-demand content 136, such as Video on Demand (VOD) and/or Pay-Per-View (PPV) movie content (collectively, "purchased content"). The stored on demand content 136 can be viewed with a television 128 via a client device 108 through an onscreen movie guide, for example, and a viewer can enter instructions to stream a particular movie, or other stored content, to a corresponding client device 108.

### Exemplary Client Device in a Television-based System

**Fig. 2** illustrates a television-based system 200 that includes an exemplary client device 202 that includes components to implement the systems and methods described herein. System 200 also includes a display device 204 to display content received by the client device 202. The client device 202 can be implemented as a set-top box, a satellite receiver, a TV recorder with a hard disk, a digital video recorder (DVR) and playback system, a personal video recorder (PVR) and playback system, a game console, an information appliance, and as any number of similar embodiments.

Client device 202 includes one or more tuners 206 which are representative of one or more in-band tuners that tune to various frequencies or channels to receive television signals, as well as an out-of-band tuner that tunes to the broadcast channel over which program data is broadcast to client device 202. Client device 202 also includes one or more processors 208 (e.g., any of microprocessors, controllers, and the like), which process various instructions to control the operation of client device 202 and to communicate with other electronic and computing devices.

Client device 202 can be implemented with one or more memory components, examples of which include a random access memory (RAM) 210, mass storage media 212, a disk drive 214, and a non-volatile memory 216 (e.g., ROM, Flash, EPROM, EEPROM, etc.). It is noted that any further reference made to storing one or more elements into one type of memory - such as the non-volatile memory 210 - implies that the one or more elements may be stored into any other type of memory - such as the random access memory 210 - if the techniques described herein may be supported with such an arrangement. Disk drive 214 can include any type of magnetic or optical storage device, such as a hard disk drive, a magnetic tape, a rewriteable compact disc, a DVD, and the like. The one or more memory components store various information and/or data such as received content, program guide data 218, recorded programs 220, configuration information for client device 202, and/or graphical user interface information. Alternative implementations of client device 202 can include a range of processing and memory capabilities, and may include any number of differing memory components than those illustrated in Fig. 2. For example, full-resource clients can be implemented with substantial memory and processing resources, whereas low-resource clients may have limited processing and memory capabilities.

An operating system 241 stored in the non-volatile memory 216 and one or more application programs 224 stored in the random access memory 216 can be executed on processor(s) 208 to provide a runtime environment. A runtime environment facilitates extensibility of client device 202 by allowing various interfaces to be defined that, in turn, allow the application programs 224 to interact with the client device 202. The application programs 224 can include a browser to browse the Web (e.g., "World Wide Web"), an email program to facilitate electronic mail, and/or any number of other application programs.

The non-volatile memory 216 also stores client information 245 that is related to the client device 202 or a user associated with the client device 202. For example, the client information 245 may include a client device identifier that uniquely identified the client device 202 within a broadcasting system, a user name and address that may be used to contact the user, a user e-mail address that may be used to transmit information to the user via e-mail, etc.

A program guide application 226 that executes on processor(s) 208 is also stored in random access memory 216 and is implemented to process the program guide data 218 for display. The program guide application 226 generates the program guides that enable a viewer to navigate through an onscreen display and locate broadcast programs, recorded programs, video-on-demand movies, interactive game selections, and other media access information or content of interest to the viewer. With the program guide application 226, the television viewer can look at schedules of current and future programming, set reminders for upcoming programs, and/or enter instructions to record one or more programs.

A request for information (RFI) application 243 is also stored in the random access memory 210 and is configured to accept user input that indicates the user would like further information about a content item the user is currently viewing, and to forward that request to a network server, such as the content distribution system 106. The RFI application 243, in the presently described implementation, requires certain data to function as described. This data is provided by other elements shown in Fig. 2, namely, a time stamp module 230, a channel information module 247 and a closed caption application 240. These elements will be described in greater detail below.

One or more functions of some of the elements shown stored in the RAM 210 may be handled by another shown element or by another element (such as a server) in a broadcast system. For example, the time stamp module 230 function may be handled at a server, where a time stamp is assigned to a request for information when it is received from the client device 202. The elements shown and the functions ascribed to the elements are for exemplary purposes only and are not meant to limit the scope of the appended claims.

The channel information module 247 stores a channel identifier, such as a number that uniquely identifies a channel to which the client device 202 is tuned. The closed caption application 240 is configured to receive closed captioning information that is provided with broadcast content and to buffer a specified amount of closed caption data in a closed caption buffer 250. For example, the closed caption application 240 may be specified to store the latest ten (10) seconds of closed captioning data in the closed content buffer 250 or may be sized to accept a desired number of bytes of closed caption data.

Client device 202 further includes one or more communication interfaces 246 and a PSTN, DSL, cable, or other type of modem 242. A communication interface 246 can be implemented as a serial and/or parallel interface, as a wireless interface, and/or as any other type of network interface. A wireless interface enables client device 202 to receive control input commands 232 and other information from a user-operated input device, such as from a remote control device 234 or from another infrared (IR), 802.11, Bluetooth, or similar RF input device. Input devices can include a wireless keyboard or another handheld input device 236 such as a personal digital assistant (PDA), handheld computer, wireless phone, or the like. A network interface and a serial and/or parallel interface enables client device 202 to interact and communicate with other electronic and computing devices via various communication links. Modem 242 facilitates client device 202 communication with other electronic and computing devices via a conventional telephone line, a DSL connection, cable, and/or other type of connection.

Client device 202 also includes a content processor 244 which can include a video decoder and/or additional processors to receive, process, and decode broadcast video signals and program data, such as NTSC, PAL, SECAM, or other television system analog video signals, as well as DVB, ATSC, or other television system digital video signals. For example, content processor 244 can include an MPEG-2 or MPEG-4 (Moving Pictures Experts Group) decoder that decodes MPEG-encoded video content and/or image data. The systems described herein can be implemented for any type of video encoding format as well as for data and/or content streams that are not encoded.

Typically, video content and program data includes video data and corresponding audio data. Content processor 244 generates video and/or display content that is formatted for display on display device 204, and generates decoded audio data that is formatted for presentation by a presentation device, such as one or more speakers (not shown) in display device 204. Content processor 244 can include a display controller (not shown) that processes the video and/or display content to display corresponding images on display device 204. A display controller can include a graphics processor, microcontroller, integrated circuit, and/or similar video-processing component to process the images.

Client device 202 also includes an audio and/or video output 246 that provides the audio, video, and/or display signals to television 204 or to other devices that process and/or display, or otherwise render, the audio and video data. Video signals and audio signals can be communicated from client device 202 to television 204 via an RF (radio frequency) link, S-video link, composite video link, component video link, or other similar communication link.

Although shown separately, some of the components of client device 202 may be implemented in an application specific .integrated circuit (ASIC). Additionally, a system bus (not shown) typically connects the various components within client device 202. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

### Exemplary Response Module

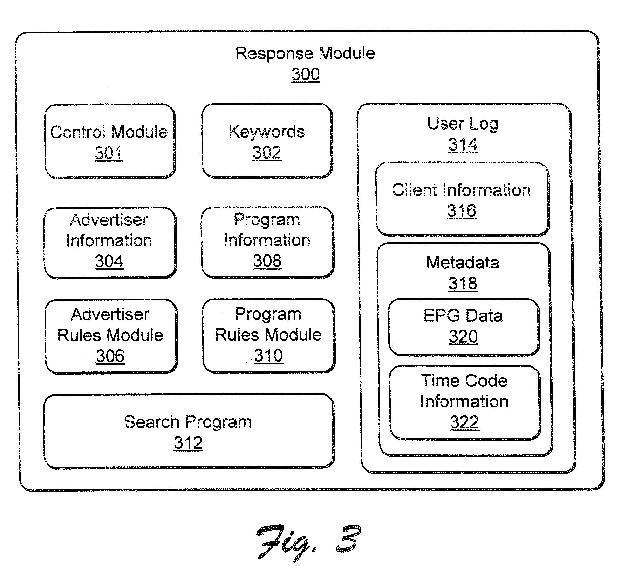

Fig. 3 is a block diagram of an exemplary response module 300 (125, Fig. 1). The exemplary response module 300 may be implemented as a software module, a hardware module or a combination of both. In the present example, the response module 300 is described as a software module.

The response module 300 includes a control module 301 and a keywords module 302 that stores one or more keywords that are used in the described techniques. The response module 300 also stores advertiser information 304, an advertiser rules module 306, program information 308 and a program rules module 310, which are accessed by the control module 301 to determine appropriate actions to take when a request for information is received.

The advertiser information 304 and the program information 308 may store various items of information. Depending on the implementation, the advertiser information 304 may contain a name, address, e-mail, phone number, etc. of each advertiser that is broadcasting an.advertisement on the network, or the advertiser information 304 could contain full searchable text of all advertisements it is showing on the network. Similarly, the program information 308 can contain information on program producers (name, address, etc.) required for communication with the program producers, or it may contain full searchable text of programs. Searching the advertiser information 304 and the program information 308 will be described in greater detail below.

A search program 312 is included in the response module 300 and is configured to search the keywords 302, the advertiser information 304 and the program information 308 for data that is included in the request for information. The search program 312 operates to identify an advertiser or a program producer, etc. that is associated with the content that was displayed when the request for information was made.

The response module 300 also includes a user log 314 that stores client information 316 and metadata 318 related to content programs. The metadata 318 includes EPG data 320 and time code information 322. The EPG data 320 contains information about time scheduling of programs, i.e. when programs start and end, which programs are on what channels, etc. The time code information 322 includes intra-program information, such as when commercials are schedules in programs. The control module 301 cross-references the EPG data 320 and the time-code data 322 against each other to determine if a request for information occurred during a program or during an advertisement.

The response module 300 functions will be discussed in greater detail, below, with respect to subsequent figures.

### Exemplary Rules Modules

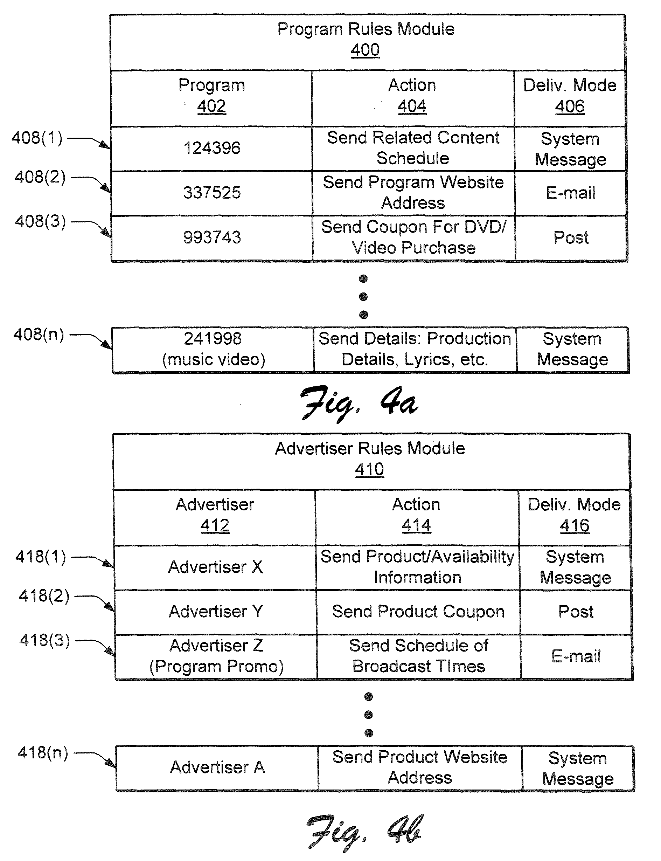

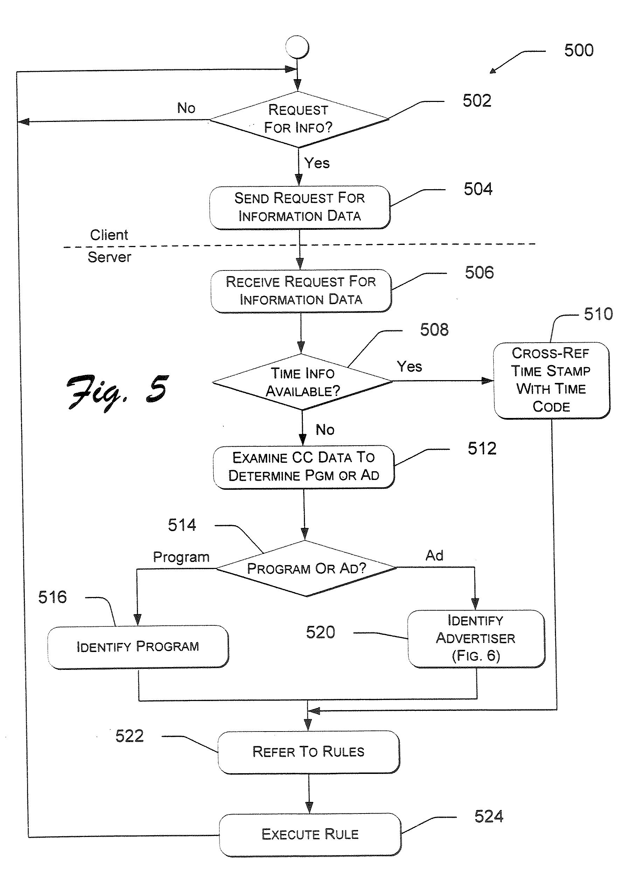

Fig. 4a is an illustration of an exemplary program rules module 400 similar to the program rules module 306 included in the response module 300 shown in Fig. 3. The program rules module 400 includes a program identifier column 402, an action column 404 and a delivery mode column 406. It is noted that the program rules module 400 shown is exemplary only and is but one way in which a rules module may be implemented in accordance with the techniques described herein.

Each row in the program rules module 400 corresponds to a program rule that includes a program identifier 402, an action 404 and a delivery mode 404. In the present example, the program rules module 400 includes rule_1 408(1), rule_2 408(2), rule_3 408(3) through rule _n 408(n). As the scheme implies, the number of rules that may be contained in the program rules module 400 is virtually unlimited.

When a program is identified with a request for information, a rule 408 associated with the program is identified. The rule 408 is consulted to determine what action to take for a particular program 402. An action may be an action to be taken directly by the entity that stores the program rules module 400 (e.g. a content provider server) or an action to be taken by another entity, such as a program producer. If the action is to be taken by another entity, then appropriate information necessary to carry out that action would be forwarded to that particular entity.

In the present example, rule_1 408(1) indicates that if a program having a program identifier of "124396" is identified in a request for information, then the action for that program is to send content related to the program to the requester by way of a system message. As used herein, a system message is a message that utilizes a messaging system employed by a client device, such as a set-top box. In a typical system, such a message may be retrieved by a user for viewing on a display such as a television. Also, a user alert, such as a small light emitting diode on the client device, may be utilized to let a user know that there is a message waiting to be accessed.

Other delivery modes that may be used include an electronic mail (e-mail) message or a post via a public or private carrier, such as the post office. Information required to implement the delivery modes is contained in the client information 316 of the response module 300. This information may include, but is not limited to, an e-mail address associated with a primary user of the client device, a client device identifier (included in the client information 213), a mailing address of the location of the client device, etc. Other delivery modes not explicitly mentioned here (e.g., a short messaging system (SMS) message) may also be used without departing from the scope of the described techniques. Some of these delivery modes are described in the course of the description of other rules in the present example.

Rule_2 408(2) indicates that if the identified program has a program identifier 402 of 337525, then a program website address (action 404) is to be sent to the via e-mail (delivery mode 406). Rule_3 408(3) indicates that if the identified program has a program identifier 402 of 993743, then a coupon for the purchase of a DVD or videotape of the program is to be sent to the requester by regular post. Finally, Rule_n 408(n) indicates that if the identified program has a program identifier 402 of 241998 (which is a music video in this example), then details related to the music video, such as production details, lyrics, etc. are to be sent to the requester via a system message.

It is noted that the program rules module 400 does not have to be implemented as a separate module from other modules, but may be integrated with other modules such as the program information module 308 (Fig. 3). The format of the program rules module 400 may also differ from the example shown, as long as the implemented format can support the functions ascribed to the program rules module 400.

Fig. 4b is an illustration of an exemplary advertiser rules module 410 similar to the advertiser rules module 316 included in the response module 300 shown in Fig. 3. The advertiser rules module 410 includes an advertiser column 412, an action column 414 and a delivery mode column 416. It is noted that the advertiser rules module 410 shown is exemplary only and is but one way in which a rules module may be implemented in accordance with the techniques described herein.

Each row in the advertiser rules module 410 corresponds to an advertiser rule that includes an advertiser identifier 412, an action 414 and a delivery mode 414. In the present example, the advertiser rules module 410 includes rule_1 418(1), rule_2 418(2), rule_3 418(3) through rule _n 418(n). As was the case with the program rules module 400 described above, the number of rules that may be contained in the advertiser rules module 410 is virtually unlimited.

When an advertiser is identified with a request for information, a rule 418 associated with the advertiser is identified. The rule 418 is consulted to determine what action to take for a particular advertiser 412. For example, rule_1 418(1) indicates that if advertiser "X" is identified in a request for information, then the action for that advertiser is to send product and availability information related to the advertisement to the requester by way of a system message.

Rule_2 418(2) indicates that if the identified advertiser is advertiser "Y", then a coupon for a product shown in the advertisement is to be sent to the requester via regular post (delivery mode 416). Rule_3 418(3) indicates that if the identified advertiser is advertiser "Z" (in this example, the advertisement is a promotional spot for a program), then a schedule of broadcast times should be e-mailed to the requester. Finally, Rule_n 418(n) indicates that if the identified advertiser is advertiser "A", then an Internet website address associated with the advertised product is to be sent to the requester in a system message.

It is noted that the advertiser rules module 410 does not have to be implemented as a separate module from other modules, but may be integrated with other modules such as the advertiser information module 306 (Fig. 3). The format of the advertiser rules module 410 may also differ from the example shown, as long as the implemented format can support the functions ascribed to the advertiser rules module 410.

### Exemplary Methodological Implementations

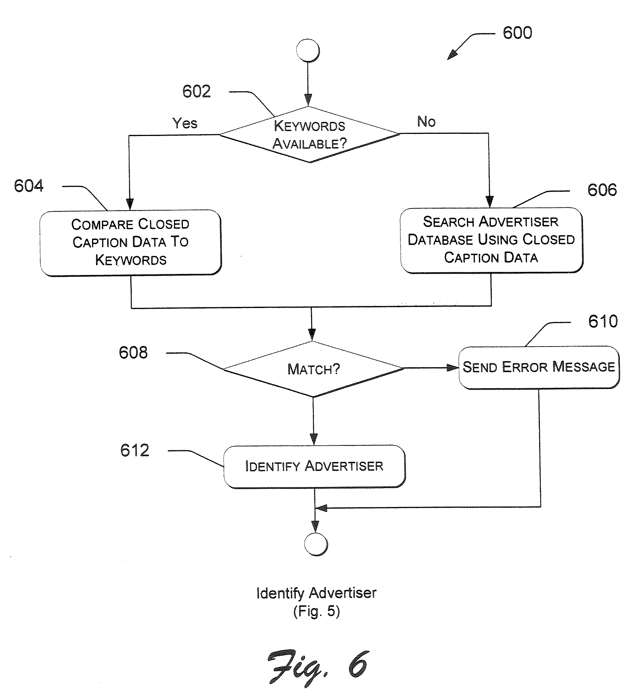

**Fig. 5** is a flow diagram 500 depicting a methodological implementation of interactive television that does not use embedded content triggers. In the discussion that follows, continuing reference will be made to the elements and reference numerals included in previous figures.

At step 502, a client device 202 monitors user input to detect a request for information entered by a user. This monitoring procedure is similar to a client device monitoring for any input signals from a user (such as a channel change), either on a client device control panel or via a remote control unit. In the presently described implementation, a request for information is entered by actuating a single button on a client device control panel or on a remote control device, e.g. an "OK" button on a remote control device. This provides a user with a very simple way to transmit a request for information to a content provider.

As long as no request for information entry is detected ("No" branch, step 502), then the process continues to monitor user input. If a request for information is detected ("Yes" branch, step 502), then the client device 202 - particularly the RFI application 243 - transmits a request for information to the content distribution system 106 at step 504.

The request for information sent from the client device 202 to the content distribution system 106 ("server") contains a variety of information, including client information 316, a channel from the channel information 247 that identifies a channel being viewed when the request for information was entered, and a time stamp from the time stamp module 230 indicating a time that the request for information was entered. In at least one implementation, the request for information sent from the client device 202 may also include data from the closed captioning buffer 250. This particular implementation is discussed further, below. The closed captioning data may be used in the event that certain other information (explained below) is unavailable. In other implementations, more or less information may be transmitted between client and server in a request for information.

The response module 125 of the content distribution system 106 receives the request for information data at step 506. At step 508, the response module 125 seeks to determine whether the request for information was entered during a program or an advertisement by first determining if there is time code information 322 available for the channel being viewed at the time the request for information was entered at the time that the request for information was entered.

Such time code information consists of a cross-reference between content that is broadcast and times of the broadcasts. For example, the time code information may indicate that the content program "60 Minutes" airs at 19:00 hours on Sunday evenings. Further, each time slot where an advertisement airs during "60 Minutes" would also be noted. For instance, the time code information may indicate that an advertisement sponsored by "Toyota" (and, possibly more specifically, "Toyota Corolla") is scheduled to be broadcast from 19:15 hours to 19:16 hours.

If time code information is available ("Yes" branch, step 508), then the content being broadcast at the time indicated in the request for information is found in the time code (step 510). This determines if a program or a specific advertisement was being broadcast at the time the request for information was entered. Furthermore, the specific program or advertiser can usually be determined from the time code information. If so, then the process continues at step 522, described in detail below.

If there is no such time code information available ("No" branch, step 508), then the closed caption information included in the request for information data is examined to determine if the request for information was entered during a program or an advertisement (step 512).

To determine if the request for information was entered during a program or an advertisement (step 512), the closed caption data sent from the closed caption buffer with the request for information is examined. If the response module 300 includes advertiser keywords 302, then if a keyword is detected in the closed caption data, it can be determined that the request for information occurred during an advertisement. If no keywords are available, then the search program 312 can compare the closed caption data with the advertiser information 304 and the program information 308 (if they contain searchable text of advertisements and programs) and determine from any matches that may be found whether the request for information was entered during a program or an advertisement.

Although not shown in Fig. 5, if it cannot be determined whether the request for information occurred during a program or an advertisement, then the process can be aborted and, in one implementation, an error message can be displayed to the user.

If the request for information occurred during a program ("Program" branch, step 514), then a program title associated with the program is identified at step 516 by cross-referencing the request for information time stamp with the EPG data 320 to see what program was broadcast on the channel identified in the request for information. (It is noted that the EPG data 320 is less detailed than the time code information described above, in that the EPG data 320 is merely a programming schedule.)

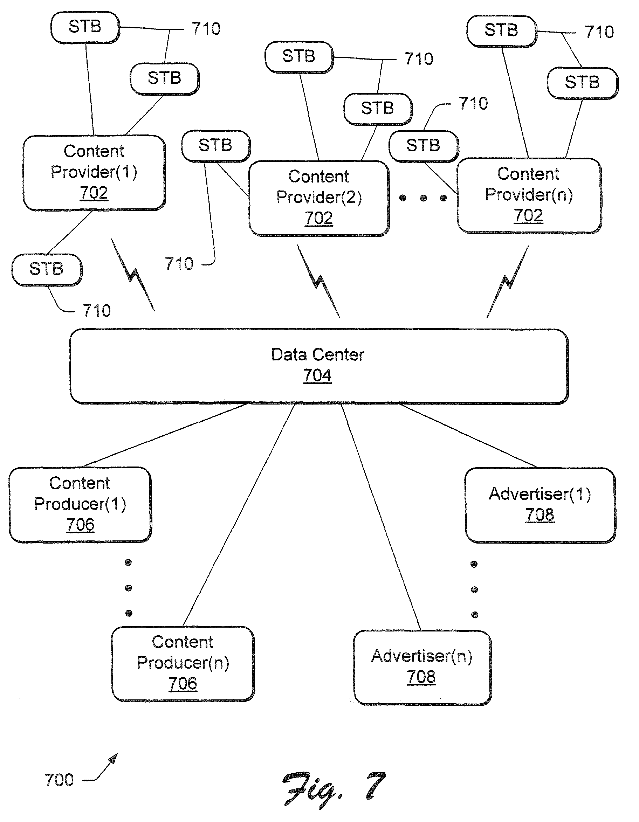

If the request for information occurred during an advertisement ("Program" branch, step 514), then the advertiser is identified at step 520. Step 520 is detailed in Fig. 6. Fig. 6 is a flow diagram 600 of an exemplary methodological implementation of the step described generally at step 520 of Fig. 5.

At step 602, the search program 312 determines if there are keywords 302 present. If so ("Yes" branch, step 602), then the closed caption data is compared to the keywords 302 at step 604. For instance, if the advertisement was one for M'oyota®, then the word "Toyota"® will most likely be included in the keywords. The closed caption data may contain the word "Toyota"® and, if so, the search program 312 determines that a match is detected ("Yes" branch, step 608) and identify the advertiser as Toyota® at step 612. Other keywords that may provide a match for "Toyota"® could include "Tundra," "truck," "T100," etc.

If keywords 302 are not available ("No" branch, step 602), then the closed caption data is compared to the advertiser database (advertiser information 304) at step 606 to see if an advertiser can be determined from the context of the request for information. If the search program 312 determines that it has located a matching advertiser ("Yes" branch, step 608), then the advertiser is identified at step 612. If the search program 312 cannot determine a match ("No" branch, step 608), then an error message is generated at step 610 and the process is aborted.

Referring now back to Fig. 5, the appropriate rules module (i.e. the program rules module 400 or the advertiser rules module 410) is searched for a match with the program or ad (step 522) and, if found, the action identified in the action column 404, 414 is executed at step 524, using the delivery mode specified in the delivery mode column 406, 416.

### Exemplary Distributed Network

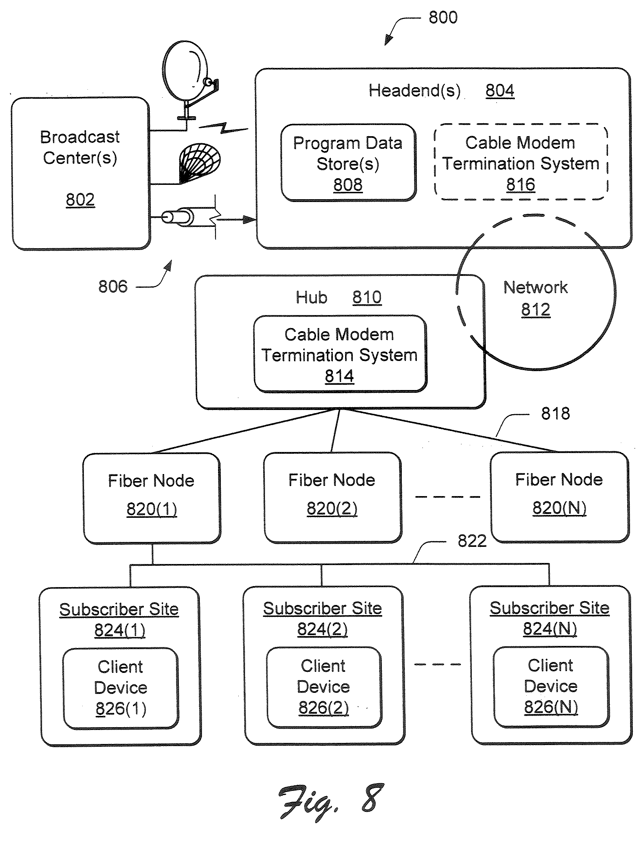

Fig. 7 is a simplified diagram of an exemplary distributed network 700 that illustrates but one way in which the described systems and methods may be implemented. The distributed network 700 includes a plurality of content providers 702, a data center 704, a plurality of content producers 706 and a plurality of advertisers 708. A plurality of set-top boxes (STB) 710 are shown connected to the content providers as client devices.

The data center 704 is configured to store one or more response modules 300 to service each content provider 702. In one implementation, the content providers 702 and the data center 704 may each contain a portion of the elements shown in the response module 300, so that the content providers 702 can cross-reference EPG data and time code data, if available, to identify programs or ads, and the data center 704 can perform searches on program and advertiser information and inform the content producers 706 and advertisers 708 of actions that should be taken in response to requests for information. In another implementation, each content provider 702 may have its own response module, but such an implementation requires redundant storage of program and advertiser information.

The data center 704 is configured to receive requests for information that are forwarded from the content providers 702, which have received the requests for information from the set-top boxes 710. The data center 704, by virtue of its connections with content producers 706 and advertisers 708, can forward actions to perform in response to requests for information and include the necessary information for the content producers and advertisers to carry out the actions, such as e-mail addresses, subscriber names, addresses, etc.

Having a centralized data center 704 allows the content producers 706 and the advertisers 708 to deal with fewer entities and makes the features described herein more feasibly, logistically and economically. It also minimizes the information that the content providers 702 must keep updated in their systems, thereby providing a higher reliability for the interactive broadcast system and making the described techniques more economically efficient for the content providers 702.

### Exemplary Broadcast Video Distribution Architecture

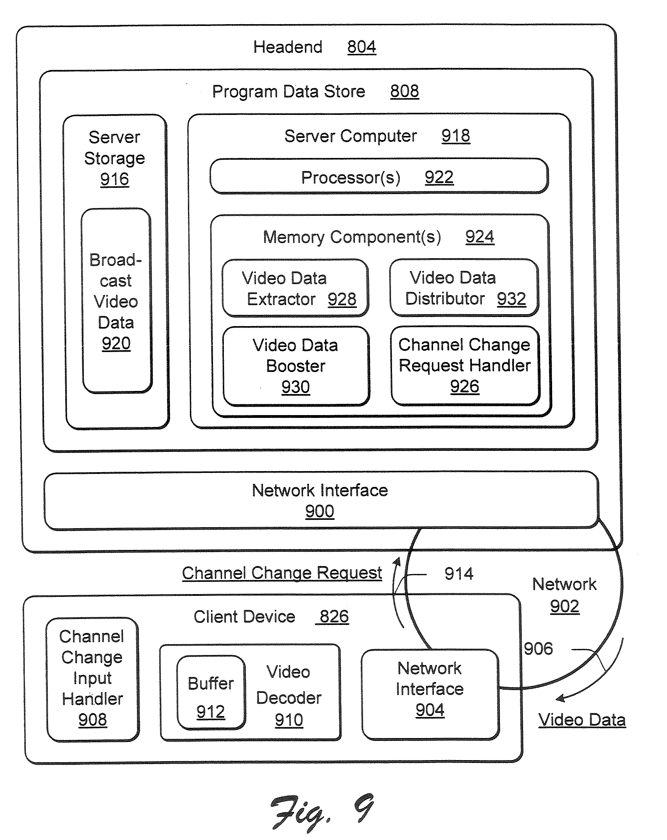

The following description relates to a more detail discussion of an environment in which the present systems and methods may be implemented. In **Fig. 8,** one or more broadcast centers 802 provide broadcast content to one or more headends 804 via one or more transmission media 806. Each broadcast center 802 and headend 804 interfaces with the various transmission media 806, such as a satellite transmission, radio frequency transmission, cable transmission, and/or via any number of other transmission media. A broadcast center 802 can be implemented as a satellite operator, a network television operator, a cable operator, and the like.

A headend 804 includes one or more program data stores 808 to record the broadcast content that is received via a transmission media 806. The broadcast content can be stored, or otherwise recorded, while the broadcast content is in a compressed format, for example, in order to facilitate the ongoing storage of the content over days, weeks, or even indefinitely. The compression format may comport with a Moving Pictures Expert Group (MPEG) algorithm, such as MPEG-2, MPEG-4, and so forth. Other compression technologies may alternatively be employed, such as Microsoft Windows® Media, Advanced Simple Profile (ASP), Cintak, and the like.

A headend 804 and a hub 810 communicate across a network 812 which can be implemented as a fiber ring that may operate with a packet-based protocol, such as Internet protocol (IP), IP over asynchronous transfer mode (ATM), and other protocols. Packets can therefore be communicated between headend 804 and hub 810, which includes a cable modem termination system 814 for terminating communications from downstream cable modems. Alternatively, headend 804 may include a cable modem termination system 816 to terminate the cable modem communications. Although only one hub 810 is illustrated in architecture 800, a headend 804 can distribute broadcast content to multiple hubs 810 via network 812.

Hub 810 distributes the broadcast content over fiber lines 818 to one or more fiber nodes 820(1), 820(2) ... 820(N). Each fiber node 820 has one or more coaxial lines 822 over which the broadcast content is output, and each coaxial line 822 includes coaxial line drops to multiple subscriber sites 824(1), 824(2), ... 824(N). Each subscriber site 824 includes one or more client devices 826(1), 826(2), ... 826(N), respectively. Subscriber sites 824 can be homes, businesses, and the like with each subscriber site 824 including multiple client devices 826 that are each directly or indirectly interfacing with one or more of coaxial lines 822. Client devices 826 may be computers, set-top boxes of varying capabilities, hand-held and/or portable electronic devices, digital televisions, and so forth. Each client device 826 may include an integrated video screen or may be coupled to a video screen.

**Fig. 9** further illustrates an exemplary headend 804 and an exemplary client device 826 as shown in Fig. 8. Headend 804 includes a network interface 900 to communicate over a network 902, and client device 826 includes a network interface 904 to communicate over the network 902. Network 902 can be any two-way unicast network, such as a unicast network that enables point-to-point Internet protocol (IP) sessions, for example. Alternatively, network 902 can be implemented as a video-on-demand (VOD) type network, as a video over digital subscriber line (DSL)-based network, and the like.

Network 902 may include one or more other nodes that are upstream of client device 826 in addition to headend 804. For example, hub 810 (Fig. 8) and fiber nodes 820 may be located between client device 826 and headend 804 for forwarding and/or routing packets or other communications between the devices. Additionally, network 902 can be implemented as a combination of networks and network interfaces 900 and 904 may vary depending on the architecture of network 902. In an exemplary cable network implementation, network interface 900 includes a cable modem termination system (such as system 816 in Fig. 8) if there is not an intervening cable modem termination system in network 902, and network interface 904 includes a cable modem. Network interface 900 and/or network interface 904 may also include components for interacting with an IP network, a DSL network, and so forth. These components may include a receiver, a transmitter, a transceiver, etc. that are adapted to interact with the appropriate network.

In one exemplary implementation, broadcast content distribution from headend 804 to client device 826 is implemented with a point-to-point IP session that is established between headend 804 and client device 826. Broadcast content, such as video data 906 for a specific channel, is streamed to client device 826 across network 902. Thus, each client device 826 receives its own designated broadcast video data stream according to its corresponding requested channel. Further, each fiber node 820 (Fig. 8), if present, has a different current allocation of a two-way portion of the network that is intended for downstream transmissions to client devices 826.

Client device 826 includes a channel change input handler 908 and a video decoder 910, as well as the network interface 904. Video decoder 910 includes a buffer 912 for storing received broadcast content, such as the video data, prior to decoding. Channel change input handler 908 receives channel change input requests from a user of client device 826. A channel change input request can be received from a remote control, a keyboard, a personal digital assistant (PDA), a touch-sensitive screen, integrated keys, and from any other type of input device.

Channel change input handler 908 can be implemented as executable instructions and/or hardware, software, firmware, or some combination thereof. Channel change input handler 908 constructs a channel change request 914 in packet form that includes an indicator of the requested channel. Channel change request 914 is communicated from channel change input handler 908 to network interface 904 of client device 826 for transmission over network 902.

Network interface 900 of headend 804 receives channel change request 914 via network 902, and provides the channel change request 914 to the program data store 808. Program data store 808 includes server storage 916 and a server computer 918. Server storage 916 includes a storage device (not explicitly shown) that comprises mass memory storage, such as a disk-based storage device. Examples of suitable disk-based storage devices and/or systems include a redundant array of independent/inexpensive disks (RAID), a Fibre Channel storage device, and the like.

Server storage 916 stores broadcast video data 920 that is broadcast from a broadcast center 802 (Fig. 8) to headend 804 in a compressed format. In an exemplary implementation, the compressed format comprises a digital stream in accordance with an MPEG protocol, such as MPEG-4. However, other compression formats may alternatively be used. As the compressed digital stream is received at headend 804, it is stored as broadcast video data 920. Server storage ; 916 can maintain broadcast video data 920 for multiple channels as it is received over hours, days, weeks, and/or indefinitely.

Server computer 918 enables access to the stored, or otherwise recorded, broadcast video data 920 at server storage 916. Server computer 918 includes one or more processors 922 and one or more memory component(s) 924. Although not shown, server computer 918 may also include other components such as input/output interfaces; a local disk drive; hardware and/or software for encoding, decoding, and otherwise manipulating video data, and so forth. A memory component 924 can be implemented as, or include, a non-volatile memory such as disk drive(s) or flash memory and/or volatile memory such as random access memory (RAM). In an exemplary implementation, a memory component 924 includes processor-executable instructions.

Specifically, a memory component 924 includes the following processor-executable instructions: a channel change request handler 926, a video data extractor 928, a video data booster 930, and a video data distributor 932. The processor-executable instructions of memory component 924 can be executed on a processor 922 to implement functions as described below. In alternative implementations, one or more of channel change request handler 926, video data extractor 928, video data booster 930, and video data distributor 932 may be stored in a memory such that they are hardware encoded for automatic execution and/or for faster execution by a processor 922.

Network interface 900 forwards channel change request 914 to channel change request handler 926 that isolates the requested channel from channel change request 914 and provides the requested channel to video data extractor 928. Video data extractor 928 extracts broadcast video data for the requested channel from broadcast video data 920 of server storage 916. Video data distributor 932 communicates the broadcast video data to network interface 900, which transmits the broadcast video data over network 902 as video data packet(s) 906. Client device 826 receives the video data packet(s) 906 via network 902 at network interface 904.

### Conclusion

Although the subject matter has been described in language specific to structural features and/or methods, it is to be understood that the invention defined by the appended claims is not necessarily limited to the specific features or methods described herein. Rather, the specific features and methods are disclosed as exemplary forms of implementing the claimed systems and methods.

## Claims

1. A method, comprising:
detecting a request for information (RFI) initiated by a user while accessing a content program;
transmitting RFI data to a server on a broadcast network; and
wherein the RFI data includes:
a time at which the RFI was initiated;
a channel accessed at the time the RFI was initiated; and
closed caption data associated with the content program that occurred prior to and including the time at which the RFI was initiated.

2. The method as recited in claim 1, wherein the closed caption data further comprises a predefined amount of closed caption data.

3. The method as recited in claim 2, wherein the amount of closed caption data further comprises a number of seconds of closed caption data.

4. The method as recited in claim 3, wherein the number seconds of closed caption data further comprises ten seconds or less.

5. The method as recited in claim 2, wherein the amount of closed caption data further comprises a number of bytes of closed caption data.

6. The method as recited in claim 1, further comprising receiving a system message from the server in response to the transmission of the RFI data.

7. The method as recited in claim 6, further comprising displaying the system message to the user.

8. The method as recited in claim 7, wherein the displaying step occurs in response to a prompt from the user to display the system message.

9. The method as recited in claim 7, further comprising storing the system message in memory until prompted to display the system message.

10. The method as recited in claim 1, wherein the request for information is initiated by a single button actuation.

11. The method as recited in claim 1, wherein the content program is one of the following types of content program: video, audio, audio/visual, multimedia.

12. A method, comprising:
receiving request for information (RFI) data from a client device on a content broadcasting network, the RFI data indicating that a client device user has requested information about a content item accessed by the client device when a request for information was initiated;
determining if the content item is a content program or an advertisement;
identifying a content program title associated with the content program if the content item is a content program;
identifying an advertiser associated with the advertisement if the content item is an advertisement;
performing an action specified for the identified content item; and
wherein the RFI data includes at least a time at which the RFI was initiated and a channel accessed at the time the RFI was initiated.

13. The method as recited in claim 12, wherein the performing an action further comprises sending information to the user, the information being related to the content item.

14. The method as recited in claim 12, wherein the performing an action further comprises sending user information to an entity associated with the content item so that the entity can provide information related to the content item to the user.

15. The method as recited in claim 12, wherein the determining if the content item is a program or an advertisement further comprises cross-referencing the time at which the request for information was initiated with content item time code data to determine whether a program or an advertisement was scheduled at the time the request for information was initiated.

16. The method as recited in claim 12, wherein:
the RFI data further comprises closed caption data associated with the content program that occurred prior to and including the time at which the RFI was initiated; and
the determining if the content item is a program or an advertisement further comprises:
using the closed caption data to derive search terms;
searching a reference database using the search terms; and
determining from matches derived from the search to determine if the content item is a program or an advertisement.

17. The method as recited in claim 16, wherein the reference database further comprises keywords, one or more keywords being associated with one or more content items.

18. The method as recited in claim 16, wherein the reference database further comprises scripts of content items that can be compared with the search terms.

19. The method as recited in claim 16, wherein the identifying an advertiser further comprises:
comparing the closed caption data to advertiser keywords; and
identifying an advertiser from one or more matches derived from the search.

20. The method as recited in claim 12, wherein the identifying a program title further comprises:
identifying which of several programs was broadcast on the channel identified in the RFI data at the time identified in the RFI data; and
identifying a title associated with the identified program.

21. The method as recited in claim 12, wherein:
the RFI data further comprises closed caption data associated with the content program that occurred prior to and including the time at which the RFI was initiated; and
the identifying an advertiser further comprises:
deriving one or more search terms from the closed caption data; and
searching an advertiser information database to identify and advertiser.

22. A client device, comprising:
a processor;
memory;
at least one channel tuner;
input means for accepting user input;
a closed caption buffer configured to store a predefined amount of latest available closed caption data;
a request for information application configured to receive and identify a request for information input from a user and transmit request for information data to a server; and
wherein the request for information data includes a channel identifier that identifies a channel tuned to by the channel tuner at the time the request for information was received, a time stamp that identifies a time that the request for information was received, and closed caption data contained in the closed caption buffer.

23. The client device as recited in claim 22, further comprising a channel identifier configured to identify a broadcast channel accessed by the channel tuner.

24. The client device as recited in claim 22, further comprising a time stamp module configured to identify a time at which user input is received.

25. The client device as recited in claim 22, further comprising a closed caption application configured to receive a closed caption signal from a server and display closed caption information with content being shown on a display.

26. The client device as recited in claim 22, wherein the input means further comprises a button that, when actuated by the user, enters the request for information.

27. The client device as recited in claim 22, wherein the closed caption buffer contains a predefined number of seconds of closed caption data that occurred prior to the request for information.

28. The client device as recited in claim 22, wherein the closed caption buffer contains a predefined number of bytes of closed caption data that occurred prior to the request for information.

29. The client device as recited in claim 22, wherein the client information further comprises information necessary to sufficiently identify a subscriber associated with the client device so that information may be sent to the subscriber by one or more delivery modes.

30. The client device as recited in claim 22, further comprising:
messaging means for receiving a system message from the server; and
display means for displaying the system message.

31. broadcast network server, comprising:
electronic program guide data that provides program information and scheduling information for a plurality of content items available on a broadcast network;
a response module configured to receive a request for information from a network client containing closed caption data associated with a selected content item accessed at the network client at a time when a client user entered a request for information;
a search program configured to perform a search using search terms derived from the closed caption data to determine a sponsor associated with the selected content item;
a rules module configured to associated a rule with a sponsor associated with the selected content item; and
wherein the response module is further configured to execute an action specified by the rules module.

32. The broadcast network server as recited in claim 31, further comprising:
a program information module;
an advertisement information module; and
wherein:
the response module is further configured to determine whether the request for information was entered during a program or during an advertisement; and
the search module is further configured to search the program information module if the request for information was entered during a program, and to search the advertiser information module if the request for information was entered during an advertisement.

33. The broadcast network server as recited in claim 32, wherein the program information module contains at least of portion of a script of one or more content items available on the broadcast network.

34. The broadcast network server as recited in claim 32, wherein the advertiser information module contains at least of portion of a script of one or more advertisements during broadcasts available on the broadcast network.

35. The broadcast network server as recited in claim 31, further comprising a keywords module; and wherein
the search module is further configured to search the keywords module with the search terms derived from the closed caption data; and
the response module is further configured to determine whether the request for information was entered during a program or during an advertisement from search results.

36. The broadcast network server as recited in claim 31, wherein the action further comprises one or more actions selected from the following list of actions: system message; e-mail message; post mailing.

37. The broadcast network server as recited in claim 31, further comprising a client information module that contains information about how to contact a subscriber associated with the network client; and wherein the action further comprises transmitting client information related to the network client from which the request for information was received to the sponsor.

38. The broadcast network server as recited in claim 31, further comprising a program information module that stores information available for content items available on the broadcast network; and wherein the action further comprises sending information available for the selected content item to the network client.

39. One or more computer-readable media including computer-executable instructions that, when executed on a computer, perform the following steps:
recognizing a user input as a user request to receive information about a content item that the user is viewing on a broadcast network channel;
transmitting closed caption data associated with the content item to a network server, the closed caption data contemporarily corresponding to the user input; and
wherein the closed caption data includes sufficient data from which a context of the content item at a time of the user input can be determined.

40. The one or more computer-readable media as recited in claim 39, further comprising:
receiving a response to the request for information; and
wherein the response includes information about the context of the content item at the time of the user input.

41. The one or more computer-readable media as recited in claim 39, further comprising:
transmitting a time at which the user input was entered; and
transmitting a channel that was being viewed at the time the user input was entered.

42. One or more computer-readable media including computer-executable instructions that, when executed on a computer, perform the following steps:
receiving request for information data from a client connected to a broadcast network, the request for information data including closed caption data that is associated with a content item viewed at the client at the time a request for information was input by a user;
analyzing the closed caption data to determine if the request for information was input during a program or during an advertisement, and to determine a sponsor associated with the program or advertisement;
determining an action to take depending on the sponsor determination; and
performing the action.

43. The one or more computer-readable media as recited in claim 42, wherein the performing an action further comprises sending user-identifying information to the sponsor that the sponsor can use to send information to the user.

44. The one or more computer-readable media as recited in claim 42, wherein the performing an action further comprises sending information related to the sponsor to the user.

45. The one or more computer-readable media as recited in claim 42, wherein the performing an action further comprises sending a system message to the user.

46. The one or more computer-readable media as recited in claim 42, wherein the performing an action further comprises sending an e-mail message to the user.

47. The one or more computer-readable media as recited in claim 42, wherein the performing an action further comprises sending information via post to the user.

48. The one or more computer-readable media as recited in claim 42, wherein the analyzing the closed caption data to determine if the request for information was input during a program or during an advertisement further comprises:
searching a plurality of keywords using search terms derived from the closed caption data; and
determining if the request for information was input during a program or during an advertisement from matches generated by the search.

49. The one or more computer-readable media as recited in claim 42, wherein the analyzing the closed caption data to determine if the request for information was input during a program or during an advertisement further comprises:
searching text databases corresponding to a plurality of content items using search terms derived from the closed caption data; and
determining if the request for information was input during a program or during an advertisement from matches generated by the search.

50. The one or more computer-readable media as recited in claim 42, wherein the sponsor further comprises a program producer or an advertiser.

51. One or more computer-readable media including computer-executable instructions that, when executed on a computer, perform the following steps:
receiving request for information data from a client connected to a broadcast network, the request for information data including a time stamp that is associated with a content item viewed at the client at the time a request for information was input by a user;
comparing the time stamp to content time code information to determine if the request for information was input during a program or during an advertisement, and to determine a sponsor associated with the program or advertisement;
determining an action to take depending on the sponsor determination; and performing the action.

52. The one or more computer-readable media as recited in claim 42, wherein the performing an action further comprises sending user-identifying information to the sponsor that the sponsor can use to send information to the user.

53. The one or more computer-readable media as recited in claim 42, wherein the performing an action further comprises sending information related to the sponsor to the user.

54. The one or more computer-readable media as recited in claim 42, wherein the performing an action further comprises sending a system message to the user.

55. The one or more computer-readable media as recited in claim 42, wherein the performing an action further comprises sending an e-mail message to the user.

56. The one or more computer-readable media as recited in claim 42, wherein the performing an action further comprises sending information via post to the user.

57. The one or more computer-readable media as recited in claim 42, wherein the analyzing the closed caption data to determine if the request for information was input during a program or during an advertisement further comprises:
searching a plurality of keywords using search terms derived from the closed caption data; and
determining if the request for information was input during a program or during an advertisement from matches generated by the search.

58. The one or more computer-readable media as recited in claim 42, wherein the analyzing the closed caption data to determine if the request for information was input during a program or during an advertisement further comprises:
searching text databases corresponding to a plurality of content items using search terms derived from the closed caption data; and
determining if the request for information was input during a program or during an advertisement from matches generated by the search.

59. The one or more computer-readable media as recited in claim 42, wherein the sponsor further comprises a program producer or an advertiser.
